**Europäisches Patentamt**

**European Patent Office**

**Office européen des brevets**

(19)

(11) **EP 1 258 310 A2**

(12) **EUROPEAN PATENT APPLICATION**

(43) Date of publication:
20.11.2002 Bulletin 2002/47

(51) Int Cl.$^7$: **B23H 3/00**, B23H 9/00

(21) Application number: 02010580.5

(22) Date of filing: 10.05.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.05.2001 IT TO20010447**

(71) Applicant: **Promotec S.r.l.**
**35030 Selvazzano Dentro (IT)**

(72) Inventor: **Marcato, Paolo**
**35030 Tramonto di Teolo (IT)**

(74) Representative: **Jorio, Paolo et al**
**STUDIO TORTA S.r.l.,**
**Via Viotti, 9**
**10121 Torino (IT)**

(54) **Method and device for cutting metal sheets**

(57) A metal sheet (2) is cut along a cutting line (9) of given shape by coating the sheet (2) with a layer (6) of insulating material to define an exposed portion (8) of the same shape as the required cutting line (9); positioning the sheet (2) inside an electrolytic cell (10) having an anode and a cathode; connecting the sheet (2) to the anode; and operating a direct-current generator (25) to generate, between the anode and cathode, a potential difference such as to oxidize the metal of the sheet (2) at the exposed portion (8).

Fig.2

**Description**

The present invention relates to a method of cutting metal sheets.

Metal sheets are normally cut using mechanical, thermal, and chemical cutting techniques.

Mechanical cutting has the drawback of requiring relatively high-cost dies and subsequent trimming.

Thermal cutting, normally using a laser device, has the drawbacks of thermally altering the cut material; relatively high operating cost; difficulty in cutting sheets of less than 1 millimeter thickness; and relatively long cutting time, by depending on the length of the cut.

Chemical cutting is normally performed using acid, is the most commonly used technique, at least for cutting thin sheets, but has the drawbacks of taking a relatively long time, and producing harmful, toxic residue which is difficult to dispose of.

It is an object of the present invention to provide a method of cutting metal sheets, designed to eliminate the aforementioned drawbacks, and which at the same time is cheap and easy to implement.

According to the present invention, there is provided a method of cutting a sheet of metal material along at least one given cutting line to obtain a given finished sheet, the method comprising the steps of partly coating the sheet with a layer of electrically insulating material, so as to define, on the sheet, an exposed portion defining said cutting line; positioning said sheet in an electrolytic cell comprising a direct-current generator, and an anode and a cathode connected electrically to said generator; connecting the anode to the cathode by means of an electrolytic conductor; connecting said sheet electrically to said generator, so that said sheet is part of the anode; activating the generator so as to maintain, between the anode and the cathode, a potential difference such as to oxidize the metal material of said exposed portion; and removing said sheet from said electrolytic cell once the metal material of said exposed portion is oxidized.

When an electrolytic conductor comprising chloride is used, the chloride may oxidize at the anode to molecular chlorine, which in small part is dissolved in the saline solution, and in large part is released in the form of gas. Since chlorine is relatively toxic and contaminating, the method defined above poses the secondary problem of preventing chlorine molecules from being released into the surrounding environment.

For this reason, the method defined above preferably comprises the further steps of aspirating, inside an absorption chamber, the molecular chlorine produced when said generator is operating; and reducing, inside said absorption chamber, said molecular chlorine substantially to chloride by means of an absorption solution.

The present invention also relates to a device for cutting metal sheets.

According to the present invention, there is provided a device for cutting a sheet of metal material along at least one given cutting line; the sheet being partly coated with a layer of electrically insulating material defining, on the sheet, an exposed portion defining said cutting line; and the device comprising an electrolytic cell, in turn, comprising a cathode, an anode, an electrolytic conductor connecting said cathode and said anode, and supporting means for receiving said sheet so that the sheet is part of the anode; and a direct-current generator for generating a potential difference between said anode and said cathode to induce oxidation of said metal material constituting said exposed portion.

A number of non-limiting embodiments of the invention will be described by way of example with reference to the accompanying drawings, in which:

Figure 1 shows a longitudinal section of a first embodiment of the device according to the present invention;

Figure 2 shows a partial cross section of a detail in Figure 1;

Figure 3 shows a schematic, partly sectioned side view of a second embodiment of the device according to the present invention;

Figure 4 shows a plan view, with parts removed for clarity, of a detail in Figure 1;

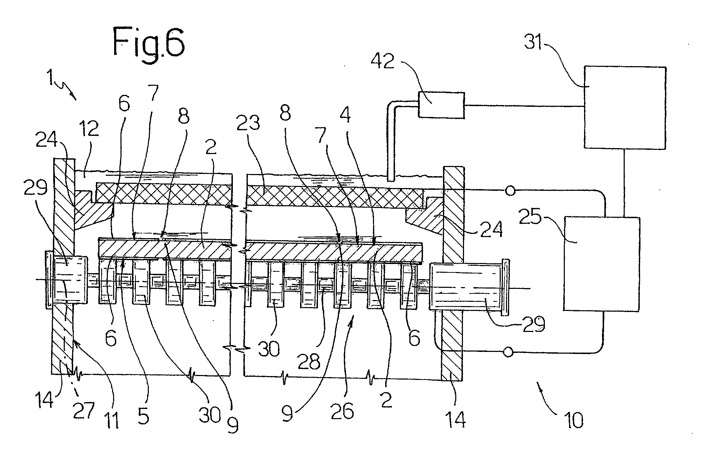

Figure 5 shows a plan view, with parts removed for clarity, of a detail in Figure 3;

Figure 6 shows a partial cross section of a detail of a third embodiment.

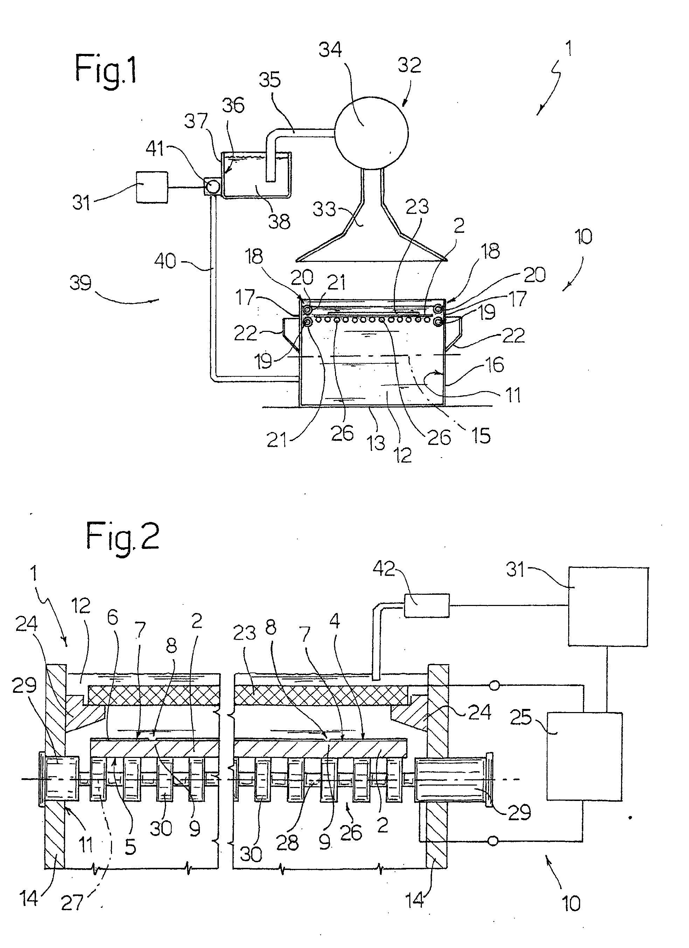

Number 1 in Figure 1 indicates as a whole a device for cutting a sheet 2 to obtain a finished sheet 3. Sheet 2 is made of metal material - in this case, iron; is relatively thin - normally 0.01 to 2 mm thick; and comprises two surfaces 4 and 5, of which surface 4 is partly coated with a layer 6 of electrically insulating material. More specifically, layer 6 defines, on surface 4, a coated portion 7 defining an exposed portion 8, in turn defining at least one cutting line 9 corresponding, in the example shown, though not necessarily, to the outline of the required finished sheet 3.

Device 1 comprises an electrolytic cell 10, in turn comprising an open-topped tank 11 containing a saline solution 12 - in this case, an aqueous sodium chloride solution - which acts as an electrolytic conductor.

Tank 11 is in the form of an elongated rectangular prism, and comprises a horizontal bottom wall 13, two vertical walls 14 extending parallel to a horizontal longitudinal axis 15 of tank 11, and two vertical walls 16 perpendicular to axis 15 and having respective substantially horizontal openings 17, facing and coplanar with each other, for the passage of sheet 2.

Each opening 17 is controlled by a respective sealing device 18 for preventing saline solution 12 from leaking from tank 11 through relative opening 17, and which comprises two horizontal rollers 19 and 20 housed, crosswise to axis 15, inside tank 11 and fitted idly to walls 14. Rollers 19 and 20 are located respectively under and over the plane defined by openings 17, have respective outer tubular coverings 21 of elastically deformable material, and are positioned contacting each other and relative wall 16 with a given pressure and in fluidtight manner.

Tank 11 also comprises two gutters 22, each of which is fixed to a respective wall 16, on the outside of cell 10 and just below respective opening 17, and provides for collecting any saline solution 12 leaking from relative opening 17.

Tank 11 is fitted inside with a flat, substantially horizontal grid 23 made of conducting material, e.g. iron or stainless steel 430, and which acts as a cathode. Grid 23 rests on two brackets 24, each connected to a respective wall 14, is immersed in saline solution 12, and is connected electrically to a direct-current generator 25 outside tank 11. By means of a known electric motor (not shown), each bracket 24 can be moved, while remaining horizontally coplanar with the other bracket 24, along a known rack (not shown) extending vertically along a respective wall 14.

Generator 25 is also connected electrically to a number of coplanar rollers 26, which are made of conducting material, e.g. titanium, rotate about respective axes 27 substantially perpendicular to axis 15, and are located beneath the plane of openings 17 to define a support, coplanar with openings 17, for sheet 2. Each roller 26 has a cylindrical rod 28 connected in rotary manner, at each end, to a relative wall 14 with the interposition of a support 29 of insulating material, and comprises cylindrical disks 30 coaxial with axis 27 and equally spaced along cylindrical rod 28 to support sheet 2 in a position coplanar with openings 17, and with surface 4 facing grid 23. Generator 25 is controlled by a control device 31 (shown schematically) which can be regulated according to the thickness of the material of sheet 2.

A suction unit 32 is located over cell 10, and comprises a hood 33, and a suction device 34 for feeding any gas in hood 33 along a conduit 35 to an absorption chamber 36 defined by a container 37 and filled with an aqueous basic absorption solution 38 containing, for example, sodium hydroxide.

A transfer device 39 is also connected to absorption chamber 36, and comprises a drain pipe 40 controlled by a valve 41 and connecting container 37 to tank 11 to permit flow of absorption solution 38 from container 37 to tank 11. Valve 41 is controlled by control device 31 as a function of the pH detected by a pH-meter 42, so as to maintain a substantially constant, substantially neutral pH of saline solution 12.

In actual use, layer 6 of electrically insulating material is applied to sheet 2 by means of a known so-called "stencil" method, which comprises preparing a known stencil frame (not shown) by depositing a known photosensitive gel on a metal frame; projecting the outline of the required finished sheet 3 on to the layer of gel; and washing to eliminate the nonimpressed part of the gel. A known electrically insulating ink is sprayed through the known stencil frame (not shown) so formed on sheet 2, so that the exposed portion 8 of surface 4 defines the outline of finished sheet 3.

At this point, sheet 2 is treated with ultraviolet (U.V.) or infrared (I.R.) radiation, depending on the type of electrically insulating ink used, to dry the layer 6 of electrically insulating material defined by the electrically insulating ink; is fed into tank 11 through one of openings 17 and between relative rollers 19 and 20; and is positioned resting on rollers 26, with surface 4 facing grid 23.

At this point, control device 31 activates generator 25, which generates a potential difference between the anode and cathode, so that, at the anode, the iron of exposed portion 8 oxidizes to a ferrous ion according to the reaction:

$$Fe \leftrightarrow Fe^{2+} + 2e^- \qquad (E^0 = -0.44 \text{ V/nhe}).$$

and dissolves electrolytically in saline solution 12. In this connection, it is important to note that the ferrous ion precipitates as hydroxide in a neutral solution of relatively low concentration, of about 0.1 M, thus preventing the ferrous ion concentration in saline solution 12 from increasing to the point of shifting equilibrium of the above reaction "leftward", and so preventing an increase in the potential difference which must be applied for the reaction to proceed.

If the potential difference generated by generator 25 between the cathode and anode is high enough, the ferrous ion in the solution oxidizes to a ferric ion according to the reaction:

$$Fe^{2+} \leftrightarrow Fe^{3+} + e^- \qquad (E^0 = +0.77 \text{ V/nhe}).$$

Ferric hydroxide being substantially insoluble in a neutral solution, such a reaction promotes removal of ferrous ions from the solution, thus preventing a "leftward" shift in equilibrium of the iron-to-ferrous ion oxidation reaction.

At the anode, the oxygen in the water may also oxidize, thus producing gaseous oxygen according to the reaction:

$$2H_2O \leftrightarrow O_2 + 4H^+ + 4\ e^- \qquad (E^0 = +\ 1.23\ V/nhe).$$

This reaction has a standard reduction potential greater than that of the ferrous ion, and oxygen oxidation has a relatively high overvoltage on iron and steel electrodes, so that, roughly speaking, predominantly iron oxidizes at the anode.

At the same time, the hydronium ion in the water is reduced at the cathode, thus producing gaseous hydrogen according to the reaction:

$$2H_2O + 2e^- \leftrightarrow H_2 + 2OH^- \qquad (E^0 = -\ 0.88\ V/nhe).$$

The ferrous ion may also be reduced at the cathode. On iron and steel cathodes, however, hydronium ion reduction is predominant, particularly at low $Fe^{2+}$ solution concentrations, and also in view of the relatively low overvoltage required to obtain this reaction. Chloride may also oxidize to molecular chlorine according to the reaction:

$$2Cl^- \leftrightarrow Cl_2 + 2e^- \qquad (E^0 = +\ 1.39\ V/nhe).$$

Part of the molecular chlorine is released as gaseous molecular chlorine, is sucked up by suction unit 32, and is bubbled into absorption solution 38. The molecular chlorine in absorption solution 38 tends to be reduced according to the reaction:

$$Cl_2 + 2e^- \leftrightarrow 2Cl^-$$

at the same time oxidizing the oxygen in the water according to the reaction:

$$2H_2O \leftrightarrow O_2 + 4H^+ + 4\ e^-$$

Part of the molecular chlorine produced dissolves in saline solution 12, and can be reduced easily at the cathode according to the reaction:

$$Cl_2 + 2e^- \leftrightarrow 2Cl^-$$

In this connection, it should be noted that molecular chlorine in water is in equilibrium with hypochlorous acid according to the reaction:

$$Cl_2 + H_2O \leftrightarrow HClO + H^+ + Cl^- \qquad (K_{eq} = 2.14 \times 10^3)$$

Hypochlorous acid is relatively easy to reduce at the cathode according to the reaction:

$$HClO + H^+ + 2e^- \leftrightarrow Cl^- + H_2O \qquad (E^0 = +\ 1.49\ V/nhe)$$

Once exposed portion 8 is oxidized, thus cutting sheet 2 along cutting line 9 into finished sheet 3, finished sheet 3 is removed from cell 10 and washed (in known manner) with a known wash solution of sodium hydroxide and water of a pH of substantially 14, to remove layer 6 of electrically insulating material. In this connection, it should be pointed out that the electrically insulating ink used in the above "stencil" method is often colored, and colors the wash solution with pigments, which can be removed using part of saline solution 12, which contains hypochlorite capable of oxidizing and so discoloring the pigments.

When the pH of saline solution 12 falls below 7, control device 31 activates valve 41 as a function of the signals received from pH-meter 42, so that part of absorption solution 38 is fed along pipe 40 into saline solution 12 to maintain a substantially constant, substantially neutral pH of saline solution 12.

Roughly speaking, the above method therefore provides as a whole for oxidizing and dissolving the iron of exposed portion 8 in solution 12 to cut sheet 2 as required. More specifically, it is important to note that even relatively thin sheets can be cut easily, and that the method takes a relatively short time, which is independent of the length of cutting line 9, and at most depends on the thickness of sheet 2, the way in which the electric field is applied, the type of electrolytic conductor, the type of metal sheet 2 is made of, and the distance between the cathode and anode.

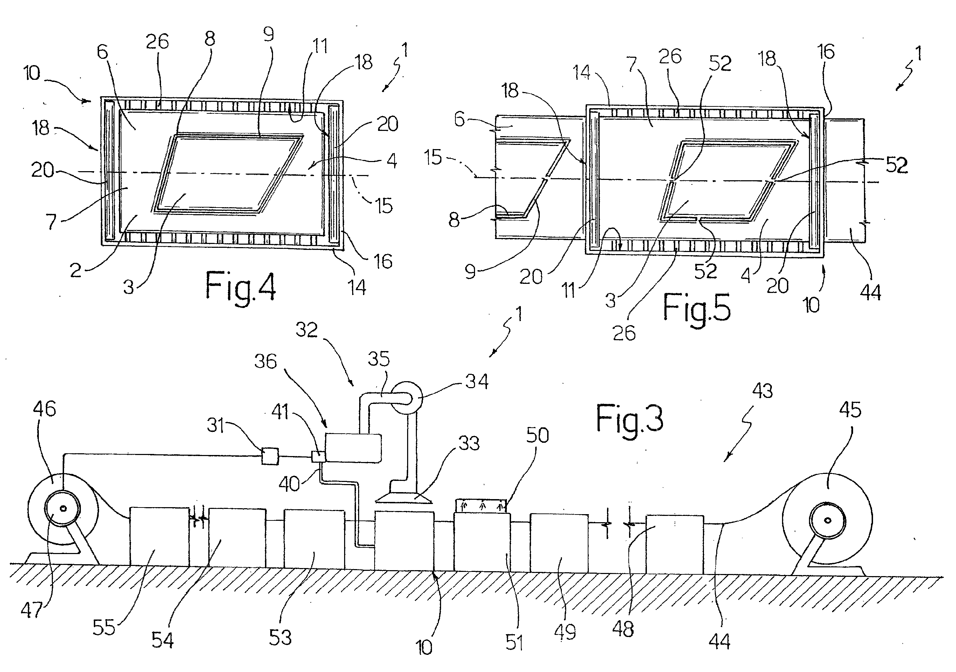

In the Figure 3 embodiment, electrolytic cell 10 forms part of an automated assembly 43 for producing finished sheets of given shape. In this case, sheet 2 forms part of a strip 44, which, in use, is drawn off an unwinding reel 45 and, once the finished sheet 3 is formed and detached from strip 44, is wound on to a winding reel 46 powered by an electric motor 47 under the control of control device 31. More specifically, electric motor 47 may, for example, be a direct-current motor with an encoder, an asynchronous motor with an inverter, or a brushless motor with a resolver.

Strip 44 is unwound off reel 45 and fed through a known wash unit 48 (shown schematically) and a known degreasing unit (not shown) to a known stencil unit 49 (shown schematically), where, by means of the stencil method described previously, layer 6 of electrically insulating material is applied successively to each sheet 2 defining strip 44, and is then dried, depending on the material of layer 6, by known infrared or ultraviolet lamps 50 (shown schematically) forming part of a known follow-up drying unit 51 (shown schematically).

It should be pointed out that, in this case, the electrically insulating ink is deposited so that, on each sheet 2 forming strip 44, portion 8 left exposed by the electrically insulating ink does not define the whole outline of finished sheet 3, but comprises at least one break - in the example shown, three - of a few, e.g. two, tenths of a millimeter, so that, once exposed portion 8 is oxidized, sheet 2, as opposed to being detached completely from strip 44, remains attached to it by microjoints 52.

Each sheet 2 on strip 44 is then fed into cell 10 through opening 17, between rollers 19 and 20, and along rollers 26, and, once exposed portion 8 is oxidized, remains integral with strip 44 when fed towards winding reel 46. Downstream from cell 10, each sheet 2 on strip 44 is fed through a known stripping unit 53 (shown schematically), in which layer 6 is washed off in a sodium hydroxide and water wash solution with a pH of substantially 14, so as to obtain a finished sheet 3 partly attached to strip 44 by microjoints 52.

The resulting strip 44 is then washed in a known wash unit 54 (shown schematically) and dried in a known drying unit (not shown) before being fed to a known parting unit 55 (shown schematically) where electric discharges are applied to eliminate microjoints 52.

Alternatively, microjoints 52 can be severed mechanically by an operator to detach finished sheets 3 from strip 44.

It should be pointed out that, by means of control device 31, it is possible to adjust the parameters of the electric field in electrolytic cell 10; control and adjust the pH of the saline solution by operating valve 41; adjust the hold time of sheets 2 inside the above operating units by controlling operation of electric motor 47; and adjust the anode-cathode distance by operating said known electric motor (not shown).

In a variation not shown, as opposed to the "stencil" method, layer 6 of insulating material is deposited on surface 4 using a known so-called "dry film" method, whereby a light-sensitive film is deposited on the whole of surface 4, and on which the outline of the required finished sheet 3 is projected in negative. At this point, sheet 2 is washed with acid to remove the nonimpressed part of the film by corrosion and form, on sheet 2, an exposed portion 8 reproducing the shape of cutting line 9.

In a further variation not shown, instead of or in addition to sodium chloride, solution 12 comprises sodium sulfate and/or sodium nitrate and/or other water-soluble salt. In which case, device 1 and operation of the device are substantially the same as described above, except that, in the absence of chloride, and therefore of the chloride oxidation and associated reactions, absorption chamber 36 of device 1 may be dispensed with.

In a further variation not shown, sheet 2 is of nonferrous metal material, e.g. copper or copper alloy. In which case, device 1 and the method only differ from those described above by the nonferrous metal, as opposed to iron, oxidizing at the anode.

In the Figure 6 variation, layer 6 of electrically insulating material is deposited on both surfaces 4 and 5. In which case, device 1 and the method only differ from those described by the "stencil" method or "dry film" method being applied to both surfaces 4 and 5 of sheet 2.

## Claims

1. A method of cutting a sheet (2) of metal material along at least one given cutting line (9) to obtain a given finished sheet (3), the method comprising the steps of partly coating the sheet (2) with a layer (6) of electrically insulating material, so as to define, on the sheet (2), an exposed portion (8) defining said cutting line (9); positioning said sheet (2) in an electrolytic cell (10) comprising a direct-current generator (25), and an anode and a cathode connected electrically to said generator (25); connecting the anode to the cathode by means of an electrolytic conductor (12); connecting said sheet (2) electrically to said generator (25), so that said sheet (2) is part of the anode; activating the generator (25) so as to maintain, between the anode and the cathode, a potential difference such as to oxidize the metal material of said exposed portion (8); and removing said sheet (2) from said electrolytic cell (10) once the metal material of said exposed portion (8) is oxidized.

2. A method as claimed in Claim 1, wherein said electrolytic cell (10) comprises a saline solution (12), in which said cathode and said anode are immersed; said saline solution (12) comprising said electrolytic conductor (12).

3. A method as claimed in Claim 2, wherein said saline solution (12) comprises chloride.

4. A method as claimed in Claim 3, and comprising the further steps of aspirating, inside an absorption chamber (36), the molecular chlorine produced when said generator (25) is operating; and reducing, inside said absorption chamber (36), said molecular chlorine substantially to chloride by means of an absorption solution (38).

5. A method as claimed in Claim 4, and comprising the further step of maintaining a substantially constant pH of said saline solution (12) by feeding part of said absorption solution (38) into the saline solution (12) in said electrolytic cell (10).

6. A method as claimed in one of Claims 2 to 5, wherein said saline solution (12) selectively comprises one of the following:

   - sulfate,
   - nitrate,
   - a combination of these.

7. A method as claimed in one of the foregoing Claims, wherein said cathode comprises a grid (23) made of electrically conducting material.

8. A method as claimed in Claim 7, wherein said electrically conducting material comprises iron.

9. A method as claimed in Claim 7 or 8, wherein said sheet (2) is placed inside said electrolytic cell (10) in a position substantially parallel to said grid (23).

10. A method as claimed in Claim 9, wherein said sheet (2) has two opposite surfaces (4, 5), only one (4) of which is coated with said layer (6) of electrically insulating material; said sheet (2) being positioned inside said electrolytic cell (10) with said coated surface (4) facing said grid (23).

11. A method as claimed in one of Claims 1 to 9, wherein said sheet (2) has two opposite surfaces (4, 5), both of which are coated with said layer (6) of electrically insulating material.

12. A method as claimed in one of Claims 9 to 11, wherein said grid (23) is larger than said sheet (2).

13. A method as claimed in one of the foregoing Claims, wherein said sheet (2) is a single sheet.

14. A method as claimed in one of Claims 1 to 12, wherein said sheet (2) forms part of a strip (44), which is fed through said electrolytic cell (10).

15. A method as claimed in Claim 13 or 14, wherein said cutting line (9) has at least one break defining a respective microjoint (52) between the relative finished sheet (3) and said strip (44).

16. A method as claimed in Claims 14 and 15, and comprising the step of mechanically severing said microjoint (52) to detach each said finished sheet (3) from said strip (44).

17. A method as claimed in one of the foregoing Claims, and comprising the step of washing said sheet (2) before coating it with said layer (6) of electrically insulating material.

18. A method as claimed in one of the foregoing Claims, and comprising the step of removing said layer (6) of insulating material from said finished sheet (3).

**19.** A method as claimed in Claim 18, wherein said removing step comprises washing said finished sheet (3) with a substantially basic wash solution.

**20.** A method as claimed in Claim 19, and comprising the step of feeding part of said saline solution (12) into said wash solution.

**21.** A device for cutting a sheet (2) of metal material along at least one given cutting line (9); the sheet (2) being partly coated with a layer (6) of electrically insulating material defining, on the sheet (2), an exposed portion (8) defining said cutting line (9); and the device (1) comprising an electrolytic cell (10), in turn, comprising a cathode, an anode, an electrolytic conductor (12) connecting said cathode and said anode, and supporting means (26) for receiving said sheet (2) so that the sheet (2) is part of the anode; and a direct-current generator (25) for generating a potential difference between said anode and said cathode to induce oxidation of said metal material constituting said exposed portion (8).

**22.** A device as claimed in Claim 21, wherein said electrolytic cell (10) comprises a saline solution (12), in which said cathode and said anode are immersed; said saline solution (12) comprising said electrolytic conductor (12).

**23.** A device as claimed in Claim 21 or 22, wherein said saline solution (12) comprises chloride.

**24.** A device as claimed in Claim 25, and comprising an absorption chamber (36) containing an absorption solution (38), and suction means (32) for aspirating gaseous molecular chlorine from said electrolytic cell (10) to said absorption chamber (36); said absorption solution (38) reducing said molecular chlorine to chloride.

**25.** A device as claimed in Claim 24, and comprising first transfer means (39) for transferring part of the absorption solution (38) from said absorption chamber (36) to said electrolytic cell (10).

**26.** A device as claimed in Claim 25, and comprising a control device (31), and at least one measuring means (42) for measuring the pH of said saline solution (12) and connected to said control device (31); said control device (31) controlling said first transfer means (39) to maintain a substantially constant pH of said saline solution (12).

**27.** A device as claimed in one of Claims 22 to 26, wherein said saline solution (12) comprises sulfate.

**28.** A device as claimed in one of Claims 21 to 27, wherein said cathode comprises a grid (23) made of conducting material.

**29.** A device as claimed in Claim 28, wherein said conducting material comprises iron.

**30.** A device as claimed in one of Claims 21 to 29, and comprising a stripping unit (53) for removing said insulating material from said finished sheet (3).

**31.** A device as claimed in Claim 30, wherein said stripping unit (53) comprises a substantially basic wash solution.

**32.** A device as claimed in one of Claims 21 to 31, wherein said sheet (2) forms part of a strip (44); the device (1) comprising feed means (47) for feeding said strip through said electrolytic cell (10).

**33.** A device as claimed in Claims 32 and 26, wherein said feed means (47) are connected electrically to said control device (31); said control device (31) operating said feed means in steps.

**34.** A device as claimed in Claim 32 or 33, and comprising a parting unit (55) for detaching said finished sheet (3) from said strip (44).

**35.** A device as claimed in one of Claims 21 to 34, wherein said electrolytic cell (10) comprises an open-topped tank (11) containing the saline solution (12), and having two parallel vertical walls (16) having respective substantially horizontal openings (17) facing and coplanar with each other for the passage of the sheet (2).

**36.** A device as claimed in Claim 35, wherein, adjacent to each opening (17), the electrolytic cell (10) comprises sealing means (18) for said saline solution (12).

**37.** A device as claimed in Claim 36, wherein said sealing means (18) comprise two horizontal rollers (19, 20) located respectively below and above a plane defined by said openings (17); each said roller (19, 20) resiliently contacting in fluidtight manner the other roller (20, 19) and said vertical wall (16) of the relative said opening (17).

**38.** A device as claimed in Claims 24 and 26, and comprising movable supports (24) on which said grid (23) rests; the movement of said movable supports (24) being controlled by said control device (31).

EP 1 258 310 A2

Fig.1

Fig.2

9

Fig.5

Fig.4

Fig.3

Fig.6

EP 1 258 310 A2